Europäisches Patentamt

European Patent Office

Office européen des brevets

(19)

(11) Numéro de publication: **0 364 372**
**A1**

## (12) DEMANDE DE BREVET EUROPEEN

(21) Numéro de dépôt: 89420353.8

(22) Date de dépôt: 19.09.89

(51) Int. Cl.⁵: **B32B 17/10 , C03C 27/12**

(30) Priorité: 03.10.88 FR 8813502

(43) Date de publication de la demande:
18.04.90 Bulletin 90/16

(84) Etats contractants désignés:
AT BE CH DE ES FR GB GR IT LI LU NL SE

(71) Demandeur: **CHRISTIAN DALLOZ S.A.**
**Usine de Daillères**
**F-39200 Saint Claude(FR)**

(72) Inventeur: **Dalloz, Christian**
**La Boissière Geovresset**
**F-01100 Oyonnax(FR)**

(74) Mandataire: **Maureau, Philippe et al**
**Cabinet Germain & Maureau Le Britannia -**
**Tour C 20, bld Eugène Déruelle**
**F-69003 Lyon(FR)**

(54) **Vitrage de sécurité stratifié transparent.**

(57) La présente invention concerne un vitrage de sécurité (2) stratifié et transparent du type comportant une feuille (3) d'un matériau dur et fragile disposée du côté du vitrage exposé aux projectiles et une feuille (4) d'un matériau synthétique ductile, dans lequel la feuille en matériau dur et fragile est constituée par une pluralité d'éléments (6) juxtaposés de manière à former des interstices (7) conférant une structure discontinue à la feuille (3).

Application à la réalisation notamment d'écrans pare-balles, de vitrines ou de pare-brises ou vitres d'avions ou de trains.

FIG. 2

EP 0 364 372 A1

# VITRAGE DE SECURITE STRATIFIE TRANSPARENT

La présente invention concerne un vitrage dit de sécurité stratifié et transparent du type comportant au moins une feuille d'un matériau dur et fragile.

Il peut s'agir notamment de stratifiés de verre-résine de polycarbonate capables de résister à l'impact de pierres, de balles ainsi que d'autres projectiles similaires. Ces vitrages sont utilisés comme écrans pare-balles dans les guichets de banques ainsi que comme pare-brises ou vitres dans les avions, les trains et les véhicules automobiles. Ils peuvent également résister aux actes de vandalisme et, par conséquent, être utilisés comme vitrines.

On connaît déjà des vitrages transparents blindés de ce type résistants à l'épreuve des chocs à hautes vitesses d'impact.

C'est ainsi que la demande de brevet français N° 2 447 355 décrit un stratifié de verre et de résine polycarbonate dans lequel la couche de verre est liée à la couche de polycarbonate par une inter-couche adhésive d'un copolymère séquencé organopolysiloxane-polycarbonate et dans lequel le verre est revêtu de deux couches d'accrochage.

Le brevet d'invention français N° 2 307 772 divulgue également une vitre composite à l'épreuve des balles comprenant une plaque de verre au silicate et une plaque de polycarbonate fixées l'une à l'autre au moyen de résine de méthacrylate durcie.

De tels vitrages blindés sont tout à fait efficaces et ont résolu les problèmes de résistance aux chocs, de légèreté, d'encombrement, de liaison des différentes couches entre elles et de prix de revient.

Le nombre, la nature, la disposition, l'épaisseur des couches de stratifiés sont choisis en fonction des exigences requises dans l'application.

Une résine synthétique comme le polycarbonate apporte, par sa ductilité, une excellente capacité d'absorption d'énergie et d'amortissement des ondes de rupture.

L'utilisation du verre silicate dans pratiquement tous les vitrages connus s'explique par les niveaux élevés de ce matériau en dureté, rigidité, stabilité thermique et chimique, et transparence. Ces qualités sont inégalées par les autres matériaux transparents connus à ce jour.

Mais le problème majeur posé par l'utilisation du verre silicate en vitrage de sécurité est que ce matériau présente une densité, mais aussi une fragilité élevée et ce même après des traitements de trempe thermique ou chimique par exemple.

La conséquence en est que, lors d'un impact ou choc, d'un projectile quelconque, le verre, bien que résistant, a tendance à se fendre dans toutes les directions, opacifiant ainsi une zone importante du vitrage autour du point impact. La visibilité au-travers dudit vitrage est donc diminuée et peut donc devenir complètement nulle dans le cas où il comporte plusieurs points d'impact.

Le vitrage ne remplit plus alors sa fonction initiale de transparence, ce qui peut être particulièrement dangereux dans le cadre de l'application aux pare-brises d'avions ou de véhicules.

L'un des buts essentiels de l'invention est donc d'obtenir un vitrage de sécurité, stratifié, transparent, très résistant aux chocs et comprenant au moins une feuille d'un matériau dur et fragile, tout en évitant la propagation des fissures engendrées par un impact et ainsi conserver une transparence correcte même après plusieurs chocs.

Le vitrage selon l'invention devra également ne pas être d'un prix de revient prohibitif.

Ces buts sont atteints par le vitrage de sécurité stratifié et transparent conforme à l'invention, qui est du type comportant au moins une feuille d'un matériau dur et fragile, en ce que cette feuille en matériau dur et fragile est constituée par une pluralité d'éléments juxtaposés de manière à former des interstices conférant une structure discontinue à ladite feuille.

Par cette disposition, les fissures provoquées par un impact de balle sur l'un des éléments de la feuille en matériau dur et fragile resteront limitées à cet élément de petite surface du fait de l'indépendance de ce dernier par rapport à ceux qui lui sont adjacents, de sorte que, même la présence de plusieurs impacts entraînant des opacifications circonscrites, ne rendra pas impossible la visibilité au-travers du vitrage.

Dans le cas le plus défavorable où le projectile frappe la feuille de matériau dur et fragile dans une zone commune à plusieurs éléments, les fissures resteront limitées à la surface totale de ceux-ci, qui est peu importante par rapport à la surface de la feuille.

Suivant une caractéristique intéressante de l'invention, les éléments constitutifs de la feuille de matériau dur et fragile s'emboîtent les uns dans les autres en formant des interstices non plans. Ceci permet à la feuille de matériau dur et fragile de présenter une certaine cohésion et ainsi d'améliorer sa tenue mécanique.

Afin d'augmenter la capacité d'amortissement des ondes de choc du vitrage, les interstices entre chaque élément de matériau dur et fragile sont, de préférence, remplis de matière synthétique transparente de manière à constituer un joint souple ou semi-rigide.

Suivant une première forme de réalisation facile à mettre en oeuvre et peu coûteuse, le vitrage est constitué par une feuille de matériau dur et fragile dont les éléments constitutifs sont de forme sensiblement parallélépipédique et par au moins une feuille de matériau synthétique ductile formant support.

Avantageusement, la surface d'un élément est comprise entre 1/400ème et 1/16ème de la surface du vitrage.

Conformément à une deuxième forme de réalisation, le vitrage de sécurité stratifié comprend plusieurs feuilles de matériau dur et fragile.

Dans ce cas, la présence d'une feuille de matériau synthétique, bien que préférée, n'est pas indispensable, car les différentes feuilles de matériau dur et fragile liées entre elles ont une cohésion suffisante pour assurer la solidité du vitrage.

Dans une variante de cette deuxième forme de réalisation, la forme et la taille des éléments constituant chacune des feuilles de matériau dur et fragile sont choisies de telle sorte que les interstices d'une feuille donnée soient décalés par rapport à ceux de la ou des feuilles qui lui sont directement adjacentes.

Dans une autre variante de cette deuxième forme de réalisation, les éléments constituant chacune des feuilles de matériau dur et fragile sont sensiblement de même forme et de mêmes dimensions.

Les vitrages composites matériau dur et fragile/matériau synthétique ductile conformes à l'invention résolvent un problème important rencontré jusqu'alors dans les vitrages de ce type. En effet, ces deux matériaux ayant des coefficients de dilatation thermique différents, la (ou les) plaque(s) de matériau dur et fragile et la (ou les) plaque(s) de matériau synthétique ductile liées solidairement l'une à l'autre ne subissent pas les mêmes variations dimensionnelles sous l'effet de la température. On imagine aisément les conséquences néfastes que cela peut avoir sur le vitrage.

Contrairement à cela, la structure fragmentaire de la (ou des) plaque(s) de matériau dur et fragile selon l'invention permet de compenser cette différence de dilatation thermique du fait que les éléments constitutifs de cette (ou ces) plaque(s), ne sont pas solidaires les uns des autres, et sont ainsi aptes à suivre fidèlement les variations dimensionnelles de la (ou des) plaque(s) en matériau synthétique ductile. En d'autres termes, les interstices entre ces éléments jouent le rôle de joint de dilatation.

Avantageusement, le vitrage présente, sur son côté non exposé aux projectiles, de l'extérieur vers l'intérieur, au moins une feuille de protection de structure continue réalisée en matériau transparent et la ou (l'une des) feuille(s) de matériau synthétique ductile.

De préférence, le matériau dur et fragile est constitué par du verre, tandis que le matériau synthétique ductile est une résine de polycarbonate.

Bien entendu, le vitrage selon l'invention n'est pas nécessairement plan, il peut, par exemple, être bombé.

De toute façon, l'invention sera bien comprise et ses avantages ressortiront de la description qui suit, à titre d'exemples non limitatifs, de plusieurs formes de réalisation du vitrage de sécurité stratifié et transparent, en référence au dessin schématique annexé dans lequel :

Figure 1 est une vue en plan du côté exposé aux projectiles d'une première forme d'exécution ;

Figure 2 est une vue partielle en coupe selon la ligne II-II de figure 1,

Figure 3 est une vue en perspective avec des découpes partielles d'une deuxième forme d'exécution ;

Figure 4 est une vue en perspective d'une variante d'exécution d'un élément constitutif de la feuille de matériau dur et fragile ;

Figure 5 est une vue en coupe d'une variante d'exécution.

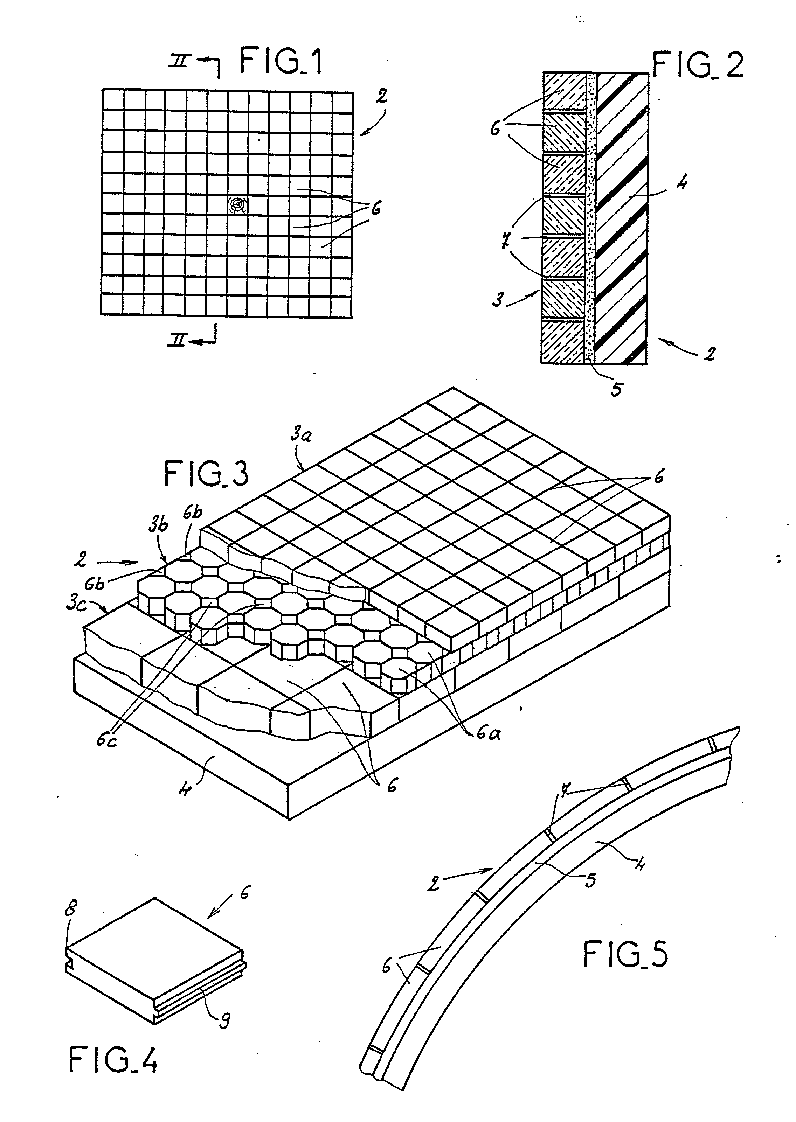

Les figures 1 et 2 montrent la forme de réalisation la plus simple d'un vitrage de sécurité **2** conforme à l'invention. Ce dernier est constitué par une feuille extérieure **3** disposée du côté expose aux projectiles et réalisée en un matériau dur, de forte densité et très résistant mais également très fragile et par une feuille rigide **4** réalisée en un matériau synthétique ductile, liées entre elles par l'intermédiaire d'une couche **5** d'un agent d'adhésion. Les matériaux connus les plus adaptés sont le verre sous toutes ses formes pour la feuille extérieure **3** et la résine de polycarbonate pour la feuille-support **4**. Bien entendu, ces choix restent purement exemplatifs.

La feuille-support **4** se présente sous la forme d'une plaque rigide tandis que la feuille extérieure **3** est constituée par une pluralité d'éléments **6** en verre identiques entre eux et de forme parallélépipédique et, plus précisément, carrée vus en plan. Ces éléments **6** sont régulièrement juxta posés sans contact entre eux de manière à former des interstices **7** et créer ainsi une discontinuité au sein de la feuille extérieure **3** de verre. La cohésion de l'ensemble et sa stabilité dimensionnelle sont obtenues par la liaison à l'aide de colle **5** de la feuille **3** ainsi constituée à la feuille-support **4** rigide.

Cette liaison est réalisée en utilisant des techniques connues en soi de mise sous presse et de chauffage telles que décrites, par exemple, dans le brevet français N° 2 233 179 ou le brevet français N° 2 231 631.

L'agent de liaison traditionnellement employé est une colle synthétique du type polyuréthane, polyvinylbutyral, résine silicone, époxy ou polyester. Les interstices 7 sont, de préférence, remplis avec une matière synthétique transparente formant joint, qui peut être en tout matériau approprié connu, par exemple, le silicone, ou même une colle telle que le polyuréthane ou similaires. Ces interstices 7 permettent d'empêcher la propagation des fissures d'un élément 6 de la feuille extérieure 3 à un autre. En outre, la présence dans ceux-ci d'un joint réalisé en un matériau élastique ou semi-rigide favorise l'amortissement de l'onde de choc apparaissant dans le vitrage, lorsqu'il est frappé par un projectile.

Dans l'exemple montré aux figures 1 et 2, les interstices 7 forment un quadrillage régulier, mais comme représenté à la figure 4, chaque élément 6 peut présenter sur deux de ses faces latérales opposées un profil d'assemblage conçu par exemple comme une rainure 8 ou une nervure 9 prévu pour s'emboîter dans un profil d'assemblage complémentaire respectivement une nervure 9 et une rainure 8 de l'élément 6 adjacent sans toutefois qu'il y ait de contact entre ces deux éléments 6.

De cette façon, la feuille extérieure 4 possède toujours une discontinuité de structure et se trouve renforcée dans sa rigidité et dans sa tenue mécanique.

Dans la variante d'exécution représentée à la figure 3, le vitrage de sécurité 2 est constitué par trois feuilles ou plaques 3 de verre, à savoir une feuille extérieure 3a prévue pour être exposée aux projectiles, une feuille intermédiaire 3b et une feuille intérieure 3c et par une feuille-support 4 en matériau synthétique comme le polycarbonate, les trois feuilles de verre 3a,3b,3c sont liées entre elles par un agent d'adhésion approprié et connu en soi, tel que le polyvinyl-butyral ou par un pontage intermoléculaire du type à liaison silane, tandis que le polyuréthane est par exemple utilisé pour fixer la feuille de verre intérieure 3c sur la feuille-support 4 en polycarbonate.

Chacune des feuilles 3a,3b,3c se présente sous la forme d'une juxtaposition d'éléments 6 sans contact entre eux séparés par des interstices plans ou non-plans et comblés ou non par un joint en matière élastique ou semi-élastique.

Les éléments 6 constituant chacune des feuilles 3 de verre ont des formes et des dimensions différentes. C'est ainsi que, vus en plan, les éléments 6 de la feuille extérieure 3a, ainsi que ceux de la feuille intérieure 3c ont une forme de carré. En ce qui concerne la feuille intermédiaire 3b, elle est composée essentiellement d'éléments 6a, qui, vus en plan, ont une forme d'hexagone, les espaces délimités par les faces non contiguës de ces éléments 6a étant complétés, sur les bords de la feuille 3b, par des éléments 6b de forme triangulaire vus en plan, et, sur la surface restante de la feuille 3b, par des éléments 6c de forme carré vus en plan. Chaque élément 6a hexagonal s'inscrit parfaitement dans un élément 6 carré de la feuille extérieure 3a, présentant lui-même un côté de dimension deux fois moins importante que celui des éléments 6 carrés de la feuille intérieure 3c.

Les interstices 7 de chacune des feuilles 3a,3b,3c sont ainsi décalés par rapport à ceux de la feuille 3a,3b,3c adjacente.

Naturellement, les éléments 6 des feuilles 3a,3b,3c du vitrage 2 selon l'invention pourraient être également de même taille et de même forme de sorte que les interstices 7 soient parfaitement alignés d'une feuille 3 par rapport à l'autre.

Ainsi qu'il ressort de la figure 5, le vitrage de sécurité 2 peut être de forme bombée pour une application du type pare-brise.

Bien que cela ne présente pas d'intérêt particulier, la feuille 4 en polycarbonate peut être disposée du côté du vitrage exposé aux projectiles.

Dans une variante non représentée sur le dessin, la feuille-support 4 en polycarbonate, lorsqu'elle est du côté du vitrage non exposé aux projectiles, est unie par collage ou similaire à une plaque de verre de structure continue destinée à la protéger des rayures susceptibles d'apparaître en cours d'utilisation.

Il est à noter que, dans le cas de vitrage de sécurité à feuilles 3 de verre multiples, la feuille 4 en polycarbonate peut être supprimée sans nuire à la solidité du vitrage.

Le vitrage de sécurité 2 selon l'invention est réalisé, soit en découpant préalablement chacun des éléments 6 constituant la (ou les) feuille(s) de verre 3 et en les fixant ensuite à l'aide d'un agent d'adhésion sur la feuille-support 4 ou sur une autre feuille de verre 3 déjà fabriquée, soit, en pratiquant une découpe à la scie de la ou des feuille(s) de verre composant le complexe stratifié préalablement assemblé.

Comme il va de soi, l'invention n'est pas limitée aux formes d'exécution décrites précédemment ; elle en embrasse, au contraire, toutes les variantes équivalentes de réalisation ou d'application qu'elles soient basées sur le choix des matériaux, la taille et la forme des éléments unitaires, le nombre des feuilles, la nature des agents d'adhésion ou sur les procédés de fabrication.

## Revendications

1- Vitrage de sécurité (2) stratifié transparent du type comportant au moins une feuille (3) d'un matériau dur et fragile, caractérisé en ce que cette feuille en matériau dur et fragile est constituée par une pluralité d'éléments (6) juxtaposés de manière à former des interstices (7) conférant une structure discontinue à ladite feuille (3).

2- Vitrage de sécurité (2) stratifié selon la revendication 1, caractérisé en ce que les éléments (6) constitutifs de la feuille (3) de matériau dur et fragile s'emboîtent les uns dans les autres en formant des interstices (7) non plans.

3- Vitrage de sécurité (2) stratifié selon la revendication 1 ou la revendication 2, caractérisé en ce que les interstices (7) entre chaque élément (6) de matériau dur et fragile sont remplis de matière synthétique transparente de manière à constituer un joint souple ou semi-rigide.

4- Vitrage de sécurité (2) stratifié selon l'une quelconque des revendications 1 et 3, caractérisé en ce que chaque élément (6) constitutif de la feuille (3) de matériau dur et fragile est de forme sensiblement parallélépipédique.

5- Vitrage de sécurité (2) stratifié selon l'une quelconque des revendications 1 à 4, caractérisé en ce que la surface d'un élément est comprise entre 1/400ème et 1/16ème de la feuille de vitrage.

6- Vitrage de sécurité (2) stratifié selon l'une quelconque des revendications 1 à 5, caractérisé en ce qu'il comprend au moins une feuille (4) d'un matériau synthétique ductile.

7- Vitrage de sécurité (2) stratifié selon l'une quelconque des revendications 1 à 6, caractérisé en ce qu'il comprend plusieurs feuilles (3a,3b,3c) de matériau dur et fragile.

8- Vitrage de sécurité (2) stratifié selon la revendication 7, caractérisé en ce que la forme et la taille des éléments (6) constituant chacune des feuilles (3a,3b,3c) de matériau dur et fragile sont choisies de telle sorte que les interstices (7) d'une feuille donnée (3a,3b,3c) soient décalés par rapport à ceux (7) de la ou des feuilles (3a,3b,3c) qui lui sont directement adjacentes.

9- Vitrage de sécurité (2) stratifié selon la revendication 7 ou la revendication 8, caractérisé en ce que les éléments (6) constituant chacune des feuilles (3a,3b,3c) de matériau dur et fragile sont sensiblement de même forme et de mêmes dimensions.

10- Vitrage de sécurité (2) stratifié selon l'une quelconque des revendications 1 à 9, caractérisé en ce qu'il présente, sur son côté non exposé aux projectiles, de l'extérieur vers l'intérieur, au moins une feuille de protection de structure continue réalisée en matériau transparent et la ou (l'une des) feuille(s) (4) de matériau synthétique ductile..

11- Vitrage de sécurité (2) stratifié selon l'une quelconque des revendications 1 à 10, caractérisé en ce que le matériau dur et fragile est constitué par du verre, tandis que le matériau synthétique ductile est une résine de polycarbonate.

12- Vitrage de sécurité (2) stratifié selon l'une quelconque des revendications 1 à 11, caractérisé en ce qu'il présente une forme bombée.

EP 0 364 372 A1

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 097 328 (GLAVERBEL)<br>* Colonne 2, lignes 70-102; figures 2,3 * <br><br>--- | 1,5 | B 32 B 17/10<br>C 03 C 27/12 |
| A | EP-A-0 218 200 (D. SWAROVSKI & CO.)<br>* Pages 2-4; figures *<br>--- | 1 | |
| A | US-A-3 867 239 (ALESI et al.)<br>* Colonne 2, lignes 14-26; figures 2,6 *<br><br>--- | 1 | |
| A | LU-A- 52 710 (FORD MOTOR CO.)<br>----- | | |

DOMAINES TECHNIQUES
RECHERCHES (Int. Cl.5)

B 32 B
C 03 C
B 44 C
B 44 F

**Le présent rapport a été établi pour toutes les revendications**

| Lieu de la recherche | Date d'achèvement de la recherche | Examinateur |
|---|---|---|
| LA HAYE | 11-01-1990 | VAN BELLEGHEM W.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)